(19) Europäisches Patentamt / European Patent Office / Office européen des brevets

(11) **EP 2 696 180 A1**

(12) **EUROPEAN PATENT APPLICATION**

(43) Date of publication:
**12.02.2014 Bulletin 2014/07**

(21) Application number: **13178829.1**

(22) Date of filing: **31.07.2013**

(51) Int Cl.:
*G01J 1/18* (2006.01)      *G01J 1/42* (2006.01)
*G01J 1/04* (2006.01)      *G01J 1/02* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **10.08.2012 JP 2012178034**

(71) Applicant: **Niles Co., Ltd.
Tokyo 143-8521 (JP)**

(72) Inventor: **Yamaguchi, Satoshi
Tokyo, Tokyo 143-8521 (JP)**

(74) Representative: **Oppermann, Frank
OANDO Oppermann & Oppermann LLP
Washingtonstrasse 75
65189 Wiesbaden (DE)**

(54) **Light automatic ON/OFF control device**

(57)    There is provided a light automatic ON/OFF control device 1 that prevents botheration and strange feelings caused by an ON/OFF operation of a head light 50 by an influence of black clouds or white clouds in a visual field range of an illuminance sensor. A forward illuminance sensor 12 for detecting illuminance forward of a vehicle and an upward illuminance sensor 14 for detecting illuminance upward of the vehicle, wherein when the output of both the illuminance sensors 12, 14 is smaller than an ON illuminance threshold, the head light switches on, and when equal to or more than an OFF illuminance threshold higher than the ON illuminance threshold, the head light switches off. Particularly since the visual field range of the upward illuminance sensor 14 is set to an angle of 45° or more, which is wider than that of the conventional visual field range, even if white clouds or black clouds appear above, an area ratio shown by these clouds within the visual field range of the upward illuminance sensor becomes small. Therefore the influence is reduced and the output of the upward illuminance sensor 14 does not cross the ON illuminance threshold or the OFF illuminance threshold. Accordingly an ON state or an OFF state of the head light does not change to prevent a temporal ON/OFF operation thereof.

Fig.2

EP 2 696 180 A1

**Description**

**BACKGROUND OF THE INVENTION**

**Field of the Invention**

The present invention relates to a light automatic ON/OFF control device for automatically controlling an ON/OFF operation of a vehicular light in accordance with illuminance outside of a vehicle.

**Description of the Related Art**

There is proposed this kind of a light automatic ON/OFF control device in which, for the purpose that the necessity of an on/off operation of a light can appropriately be determined under various kinds of traveling environments, a forward illuminance sensor for detecting illuminance forward of a vehicle and an upward illuminance sensor for detecting illuminance upward of the vehicle are provided, wherein the necessity of the ON/OFF operation for the vehicular light can be determined based upon a comparison between the forward illuminance and the upward illuminance that both the illuminance sensors output. For example, in a light automatic ON/OFF control device described in Japanese Utility Model Laid-Open Publication No. 59-58643, a head light switches on only when the forward illuminance and the upward illuminance that are output from both the illuminance sensors are both equal to or less than a specific value (illuminance threshold). Therefore even if the upward illuminance becomes below the specific value because of an influence of a dark part of a ceiling under the elevated road at vehicle traveling along a high-speed road during a daytime, the head light is not switched on when the side ahead of a vehicle is bright.

In the above-mentioned control device in which the forward illuminance and the upward illuminance that are output from the two illuminance sensors are compared, for certainly separating a detection area of one illuminance sensor from a detection area of the other illuminance sensor, a visual field range of each sensor is set to be relatively narrowed, for example, it is general to set the visual field range of the forward illuminance sensor to substantially 10° and the visual field range of the upward illuminance sensor to 40° or less.

However, although the above-mentioned conventional light automatic ON/OFF control device of the two-illuminance sensor type is configured with the aim of making the appropriate ON/OFF operation determination of the head light, there occur the events as follows.

(a) Regardless of a bright daytime, in a case where a vehicle travels on a general road positioned under a high-speed road, when not only the upward illuminance but also the forward illuminance become below the illuminance threshold under which the light should switch on because of a preceding traveling vehicle or shadows of buildings, the head light switches on, and after that, the head light switches off when the vehicle leaves a road under the high-speed road.

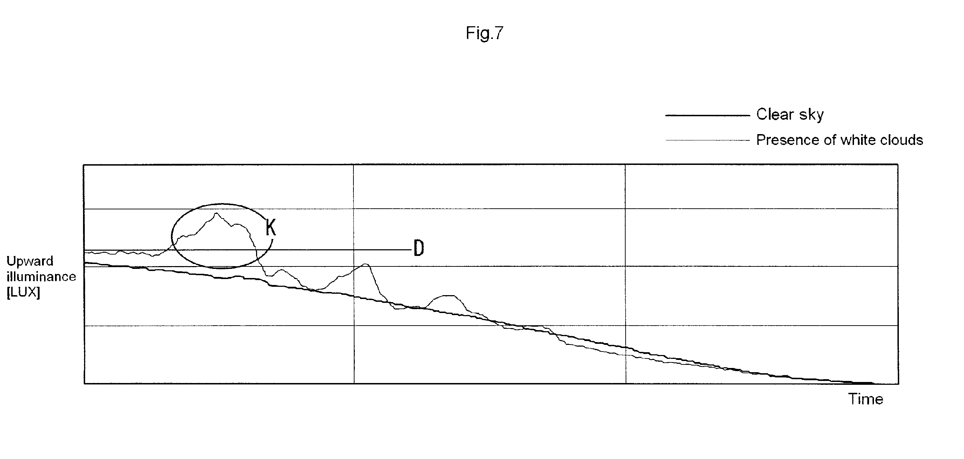

(b) In a case where the upward illuminance temporarily exceeds the illuminance threshold because of an influence of artificial light such as illumination or local white clouds in a state where at night fall, the forward illuminance and the upward illuminance become below the illuminance threshold under which the head light is switched on, the head light is forcibly switched off. After that, when the upward illuminance becomes below the illuminance threshold with the influence of the above-mentioned artificial light or white clouds being lost, the head light again switches on. FIG. 7 is a diagram showing the influence of white clouds at nightfall, wherein on a clear day with no cloud, the upward illuminance is stable and is gradually reduced, and on the other hand, when the white cloud appears, the upward illuminance changes in an increasing direction more than on a clear day, and irregularly exceeds the illuminance threshold D as a K part. In reverse, when a thick cloud appears, the upward illuminance changes in a decreasing direction more than on a clear day although not particularly illustrated.

The artificial light, the local building or the cloud, which is mentioned above, and the like can be defined as a temporal noise area in the visual field range of the illuminance sensor. The above event that an ON/OFF state of the head light is switched depending on the noise area is unnatural for a driver, and gives botheration or a strange feeling to the driver. In addition, the illuminance threshold is set to a single value in the above-mentioned conventional device, but even in a case where two thresholds composed of an ON illuminance threshold and an OFF illuminance threshold are set as the illuminance threshold for improving the instability when the illuminance in the surroundings of a vehicle goes up or down in the vicinity of the above illuminance threshold, the problem similar to the above-mentioned occurs.

**SUMMARY OF THE INVENTION**

Accordingly, the present invention is made in view of the above-described conventional problems, and an object of the present invention is to provide a light automatic ON/OFF control device that reduces an influence of a noise area in a visual filed range of an illuminance sensor to improve accuracy of ON/OFF control of a light and reduce botheration and strange feelings given to a user.

A light automatic ON/OFF control device according to an aspect of the present invention comprises a forward illuminance sensor for detecting illuminance forward of a vehicle, an upward illuminance sensor for detecting illuminance upward of the vehicle, and a control unit configured to compare output of each of the forward illuminance sensor and the upward illuminance sensor with a predetermined illuminance threshold to control an ON/OFF operation of a light, wherein a visual field range of the upward illuminance sensor is set to a range equal to or more than 45°.

According to the light automatic ON/OFF control device in the aspect of the present invention, even if a noise area such as white clouds or black clouds appears, since an influence by the noise area of the cloud is reduced in the visual field range of the upward illuminance sensor, the output of the upward illuminance sensor does not cross the illuminance threshold. Therefore a temporal ON/OFF operation of the light can be prevented.

## BRIEF DESCRIPTION OF THE DRAWINGS

Other objects, features, and advantages of the present invention will become more apparent from the following detailed description made with reference to the accompanying drawings, in which like parts are designated by like reference numbers and in which:

FIG. 1 is a block diagram showing the configuration of a light automatic ON/OFF control device according to an embodiment in the present invention;
FIG. 2 is a diagram showing the arrangement configuration of a sensor unit in the light automatic ON/OFF control device according to the embodiment;
FIG. 3 is a flow chart showing the flow of a light ON/OFF determination in the light automatic ON/OFF control device according to the embodiment;
FIG. 4 is a flow chart showing the flow of the light ON/OFF determination in the light automatic ON/OFF control device according to the embodiment;
FIG. 5A is diagrams at the time of changing a visual field range of an upward illuminance sensor in the light automatic ON/OFF control device according to the embodiment;
FIG. 5B is diagrams showing an image change of a view corresponding to FIG. 5A in the light automatic ON/OFF control according to the embodiment;
FIG. 6 is a table showing an illuminance noise area occupying percent and detection illuminance at the time of changing the visual filed range in the light automatic ON/OFF control according to the embodiment; and
FIG. 7 is a diagram showing an influence degree on the upward illuminance of white clouds at night fall in the light automatic ON/OFF control according to the embodiment.

## DESCRIPTION OF THE PREFERRED EMBODIMENTS

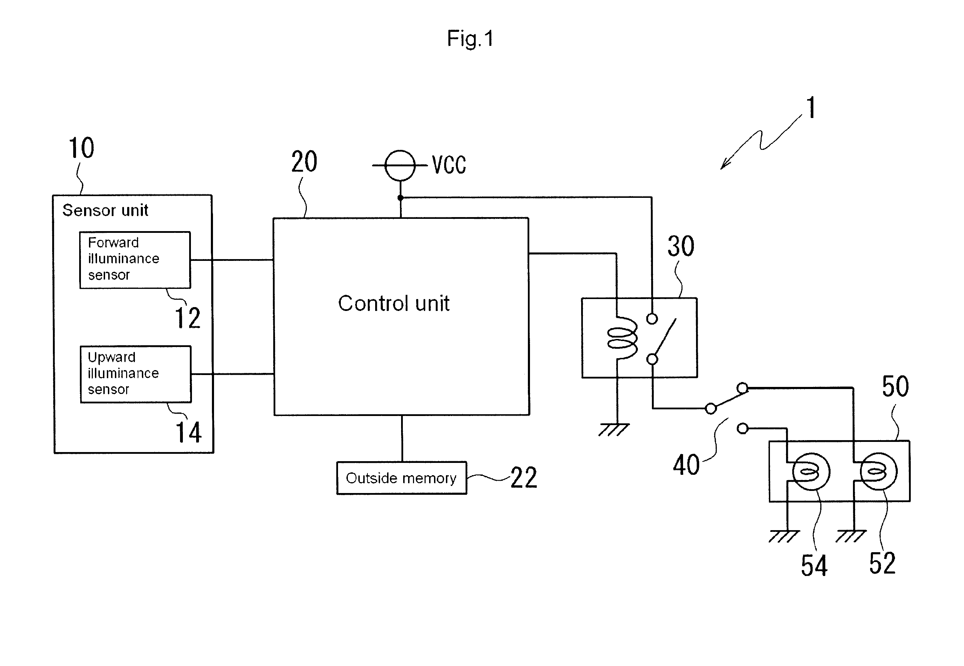

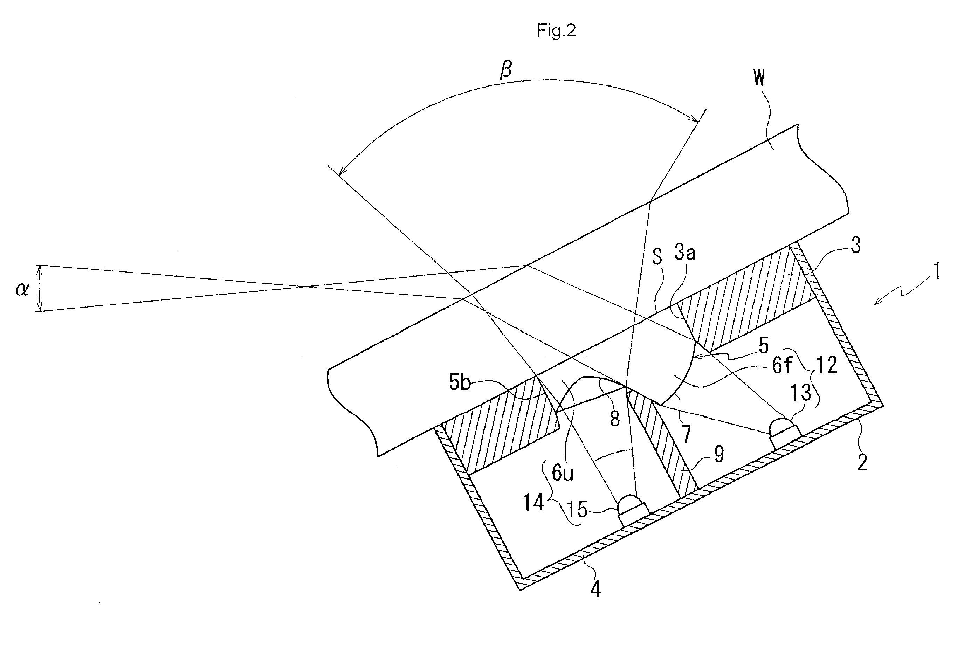

Hereinafter, a light automatic ON/OFF control device according to an embodiment in the present invention will be explained with reference to the accompanying drawings. FIG. 1 is a block diagram showing the configuration of the light automatic ON/OFF control device according to the present embodiment. FIG. 2 is a diagram showing an arrangement configuration of a sensor unit. First, the configuration of the sensor unit 10 in the light automatic ON/OFF control device 1 will be explained with reference to FIG. 2. The sensor unit 10 is formed as a unit in which a casing 2 has a front wall 3 and a rear wall 4 opposing with each other, a plastic light guide body 5 is fitted in a window 3a formed in the front wall 3, and a forward light-receiving element 13 and an upward light-receiving element 15, which are respectively formed of, for example, a photo diode, are installed on the rear wall 4. A front end of the light guide body 5 is provided to be flush with a front surface of the front wall 3 (side of a windshield W), and is formed as a mounting surface S to the windshield W.

The sensor unit 10 is mounted on the windshield W such that the light guide body 5 and the front wall 3 make close contact with an inner surface (side of the room inside) of the windshield W by a transparent adhesive having an index of refraction equivalent to that of the windshield W. The light guide body 5 has an index of refraction equivalent to that of the windshield W, and is configured such that a forward light guide part 6f is integral with an upward light guide part 6u.

The forward light guide part 6f forms a convex lens in which, in a state where the sensor unit 10 is mounted to the windshield W, an upper half part of the light guide body 5 obliquely extends in a direction of leaving a lower half part thereof to form a convex surface 7 on the end surface at a side of a room inside, and an optical axis of the convex lens passes through the substantial center of the mounting surface S. The upward light guide part 6u has a concave surface 8 on the lower half part of the light guide body 5 at a side of the room inside, that is, on an opposing surface to the upward light receiving element 15 to form a concave lens, and an optical axis of the concave lens is directed in a direction leaving the optical axis of the forward light guide part 6f (convex lens) as the optical axis of the concave lens is closer to the backward (side of the room inside). The optical axis of the upward light guide part 6u (concave lens) also passes through the mounting surface S, but may not necessarily pass through the same center of the mounting surface S as that of the forward light guide part 6f. However, since the forward light guide part 6f and the upward light guide part 6u are positioned to be adjacent to each other, the light flux passing the forward light guide part 6f crosses the light flux passing the upward light guide part 6u within the light guide body 5 and the windshield W.

A side wall 5b of the light guide body 5 is surrounded by an inner wall of the window 3a, and a large part thereof is formed to be hidden within the plate thickness of the front wall 3. In addition, the forward light guide part 6f on a room-inside side end surface of which the convex surface 7 is formed projects closer to a side of the room inside than the room-inside side end surface of the upward light guide part 6u on which the concave surface 8 is formed. Therefore this projection of the forward light guide part 6f is exposed to the side of the room inside. A light blocking wall 9 surrounding a part of this projection that is exposed from the front wall 3 to a side of the room inside is formed to rise up from the rear wall 4. Thereby the light to the side wall 5b other than the end surfaces of the light guide body 5 opposing the forward light-receiving element 13 and the upward light-receiving element 15 is blocked, which prevents outside light other than incoming light from the forward and the upward from entering into the light guide body 5 from the side wall 5b of the light guide body 5.

The forward light-receiving element 13 is arranged on the optical axis of the forward light guide part 6f, and the forward light guide part 6f and the forward light-receiving element 13 both form a forward illuminance sensor 12, which receives light from the forward within a visual field range $\alpha(°)$ forming a circular cone. It should be noted that in FIG. 2, the light flux converges as an outside (forward) distance from the windshield W is longer, but the light flux is reversed in a position not so far from the windshield W, and then spreads out at an angle $\alpha$. The upward light-receiving element 15 is arranged on the optical axis of the upward light guide part 6u, and the upward light guide part 6u and the upward light-receiving element 15 form an upward illuminance sensor 14, which receives light from the upward within a visual field range $\beta$ (°) forming a circular cone. The visual field range $\alpha$ and the visual field range $\beta$ are set not to overlap.

Since the forward light guide part 6f and the upward light guide part 6u are united as the light guide body 5, the mounting of them on the windshield W does not require a great effort in the arrangement thereof, and in relation of the forward and upward light guide parts 6f and 6u to the forward light-receiving element 13 and the upward light-receiving element 15, the light guide body 5 is simply fitted in the window 3a of the casing 2 for them to be positioned. It should be noted that, since the light is subject to internal reflection on the side wall 5b of the light guide body 5, as a length of the side wall 5b from the mounting surface S is the shorter, the better, so that the reflected light does not affect the visual field ranges $\alpha$ and $\beta$. However, considering a cross-sectional configuration of each of the forward light guide part 6f forming the convex lens and the upward light guide part 6u forming the concave lens or the minimum thickness of the plastic forming the light guide body 5 at the molding, it is preferable that the length of the side wall 5b of the light guide body 5 is at least 2.5mm or more. The specific visual field ranges $\alpha$ and $\beta$ will be described later.

Next, an entire configuration of the light automatic ON/OFF control device 1 will be explained with reference to FIG. 1. The forward illuminance sensor 12 (forward light-receiving element 13 thereof) and the upward illuminance sensor 14 (upward light-receiving element 15 thereof) in the sensor unit 10 as described above are connected to a control unit 20, and a head light 50 formed of a high beam light 52 and a low beam light 54 is in turn connected to the control unit 20 through a relay 30 and a selector switch 40. An outside memory 22 is further connected to the control unit 20. The forward illuminance sensor 12 and the upward illuminance sensor 14 output signals of the forward illuminance Lf and the upward illuminance Lu based upon light amounts incident upon them respectively.

The control unit 20 uses two thresholds composed of an ON illuminance threshold and an OFF illuminance threshold larger than the ON illuminance threshold, as the illuminance threshold. The control unit 20 compares these illuminance thresholds with the forward illuminance Lf and the upward illuminance Lu to determine the necessity of the illumination by the head light 50, thus controlling the relay 30. That is, in a case where the illumination by the head light 50 is necessary, the relay 30 is ON to connect the head light 50 to the power source VCC, and in a case where the illumination is not necessary, the relay is OFF to block the head light 50 from the power source VCC. The ON illuminance threshold Don and the OFF illuminance threshold Doff that are described above, and the like are in advance stored in the outside memory 22.

The head light 50 is switched to either one of the high beam light 52 and the low beam light 54 by an operation of the selector switch 40. It should be noted that a switch for performing an ON/OFF operation of the head light 50 by a manual operation of a driver, a manual/automatic selector switch, and the like are also connected to the control unit 20, which enables selection of control modes, but in FIG. 1, only a system relating to the automatic ON/OFF control is illustrated.

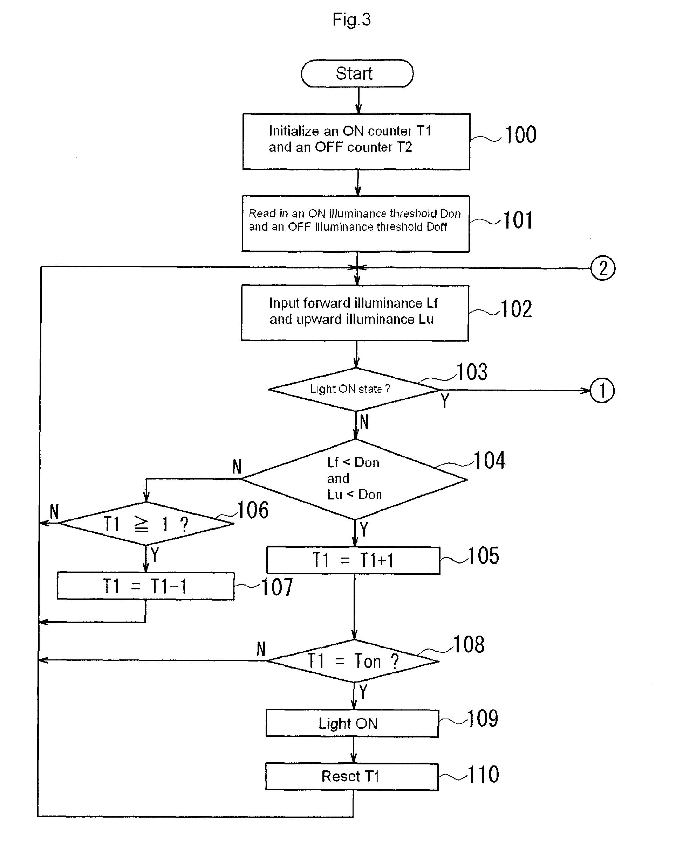

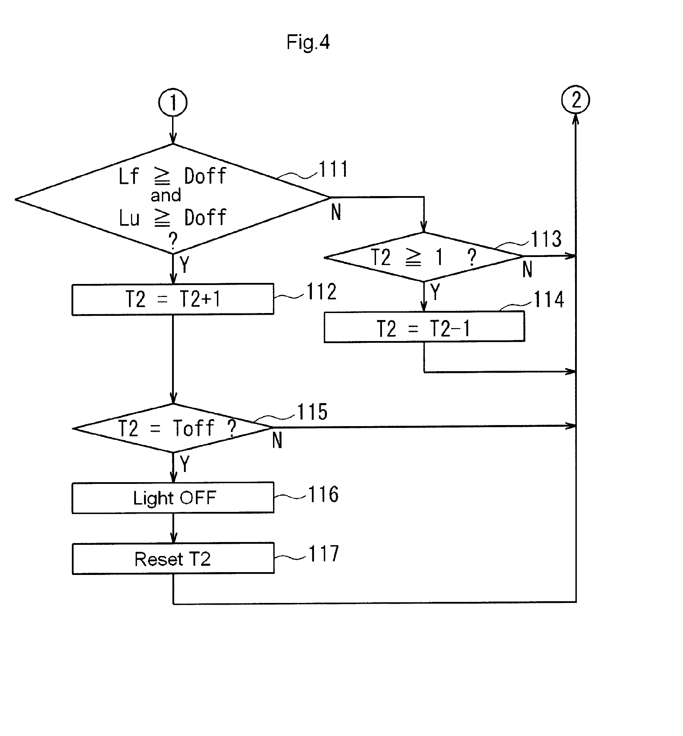

FIG. 3 and FIG. 4 are a flow chart showing a flow of light ON/OFF determination of the head light 50 in the control unit 20. Herein the automatic ON/OFF control mode is assumed to be selected. In the control unit 20, first at step 100 an ON (Light On) counter T1 and an OFF (Light Off) counter T2 incorporated in the control unit 20 are initialized, and thereafter, at step 101 an ON (Light On) illuminance threshold Don and an OFF (Light Off) illuminance threshold Doff are read in from the outside memory 22. At step 102 forward illuminance Lf is input from the forward illuminance sensor 12, and upward illuminance Lu is input from the upward illuminance sensor 14.

In addition, at step 103 it is checked whether or not the head light 50 is already in an ON state. When the head light 50 is not in the ON state, at step 104 it is checked whether or not the forward illuminance Lf is smaller than the ON illuminance threshold Don, and the upward illuminance Lu is smaller than the ON illuminance threshold Don. When each of the forward illuminance Lf and the upward illuminance Lu is smaller than the ON illuminance threshold Don, the process goes to step 105, wherein the ON counter T1 is incremented.

On the other hand, When at step 104 it is checked that at least one of the forward illuminance Lf and the upward illuminance Lu is equal to or more than the ON illuminance threshold Don, at step 106 it is checked whether or not a value of the ON counter T1 is one or more. When the value of the ON counter T1 is one or more, the process goes to step 107, wherein the ON counter T1 is decremented, and then the process goes back to step 102. When at step 106 it is checked that the value of the ON counter T1 is smaller than one, that is, when T1 is equal to zero, the process goes back to step 102 as it is.

After step 105, at step 108 it is checked whether or not the value of the ON counter T1 reaches a predetermined value Ton. When at step 108 it is checked that the  value of the ON counter T1 does not reach Ton, the process goes back to step 102. In addition, when the ON counter T1 reaches Ton by repetition of the processes of steps 102, 105, 106, and 107, the process goes from step 108 to step 109, wherein an ON signal is output to the relay 30 to switch on the head light 50. After that, at step 110 the ON counter T1 is reset, and the process goes back to step 102. As a result of the above-mentioned flow, when the state where the forward illuminance Lf and the upward illuminance Lu both are smaller than the ON illuminance threshold Don is integrated by predetermined times, the head light 50 is switched on. That is, the head light 50 is to be switched on at night, at twilight or at the time a vehicle enters in a tunnel.

After the head light 50 is switched on by the above-mentioned process, the process goes from step 103 to step 111. At step 111 it is checked whether the forward illuminance Lf is equal to or more than the OFF illuminance threshold Doff, and the upward illuminance Lu is equal to or more than the OFF illuminance threshold Doff. When each of the forward illuminance Lf and the upward illuminance Lu is equal to or more than the OFF illuminance threshold Doff, the process goes to step 112, wherein the OFF counter T2 is incremented.

On the other hand, When at step 111 it is checked that at least one of the forward illuminance Lf and the upward illuminance Lu is smaller than the OFF illuminance threshold Doff, at step 113 it is checked whether or not a value of the OFF counter T2 is one or more. When the value of the OFF counter T2 is one or more, the process goes to step 114, wherein the OFF counter T2 is decremented, and then the process goes back to step 102. When at step 113 it is checked that the value of the OFF counter T2 is smaller than one, that is, when T2 is equal to zero, the process goes back to step 102 as it is.

After step 112, at step 115 it is checked whether or not the value of the OFF counter T2 reaches a predetermined value Toff. When at step 115 it is checked that the value of the OFF counter T2 does not reach Toff, the process goes back to step 102. In addition, when the OFF counter T2 reaches Toff by repetition of the processes of steps 102, 103, 111, 112, 113 and 114, the process goes from step 115 to step 116, wherein an OFF signal is output to the relay 30 to switch off the head light 50. After that, at step 117 the OFF counter T2 is reset, and the process goes back to step 102.

As a result of the above-mentioned flow, when the state where the forward illuminance Lf and the upward illuminance Lu both are equal to or more than the OFF illuminance threshold Doff is integrated by predetermined times, the head light 50 is switched off. That is, the head light 50 is to be switched off at a daytime or at twilight. By the above-mentioned control, after the forward illuminance Lf and the upward illuminance Lu both are smaller than the ON illuminance threshold Don and the head light 50 is switched on, the ON state of the head light 50 continues until the forward illuminance Lf and the upward illuminance Lu both are equal to or more than the OFF illuminance threshold Doff. As a result, for example, when the head light 50 is switched on at night, even if the forward illuminance Lf only is equal to or more than the OFF illuminance threshold Doff, since it is determined that the forward is bright because of an oncoming car, the ON state of the head light 50 is to continue.

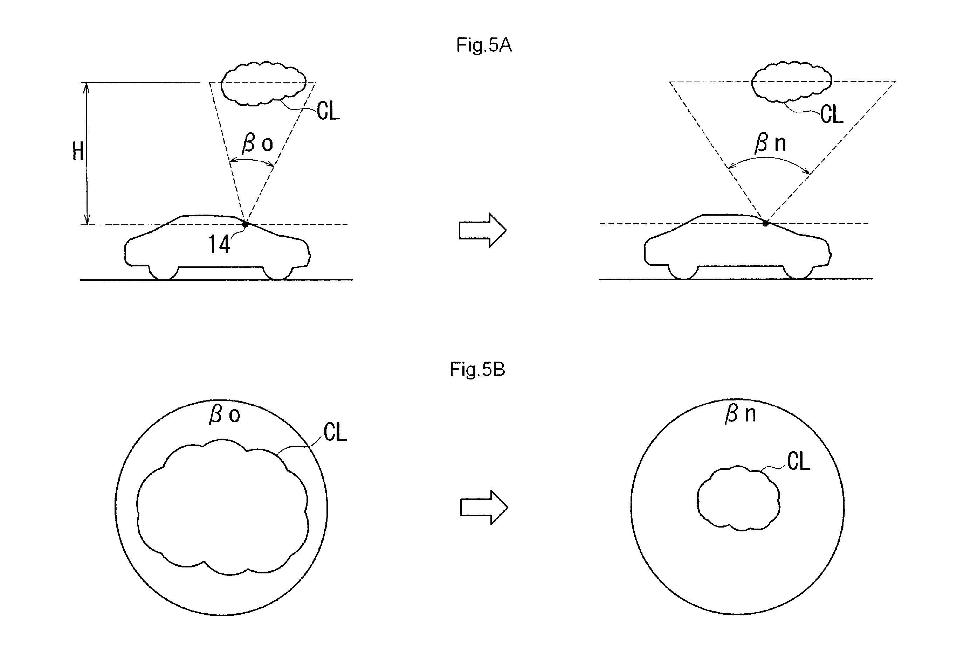

Next, the visual field range of each illuminance sensor will be explained. The visual field range $\alpha$ of the forward illuminance sensor 12 is set to be equal to or less than 10° and the visual filed range $\beta$ of the upward illuminance sensor 14 is set to a value for meeting the condition to be described later within a range of 45° or more. FIG. 5A is diagrams at the time of changing a visual field range of the upward  illuminance sensor 14, and FIG. 5B is diagrams showing an image change of a view corresponding to FIG. 5A. It is found out that as shown in FIG. 5A, when the conventional narrow visual field $\beta o$ is changed into a wide angle of $\beta n$, even if a size and a height position of a cloud CL above a vehicle are the same, as shown in FIG. 5B an area ratio of the cloud occupying the visual field range is changed from a large state to a small state.

For example, when $\beta o = 40(°)$, $\beta n = 45(°)$, an area ratio of a cloud CL occupying the conventional visual field range is 90%, and a height from a vehicle (sensor position) to the cloud CL is indicated at H, the visual field range area at the height of the cloud CL is as follows.

$$\text{In } \beta o, \; So \cong (H \times \tan (\beta o/2)) \; 2 \times \pi = 0.42 \times H2$$

$$\text{In } \beta n, \; Sn \cong (H \times \tan (\beta n/2)) \; 2 \times \pi = 0.54 \times H2$$

Therefore a ratio of an area of a cloud CL occupying the visual field range $\beta n$:

$$A \cong (So \times 0.9) \times 100/Sn = 70\%$$

Herein in a case where the illuminance threshold for light ON determination (herein, ON illumnance threshold) is set to Don = 550 (Lux), the illuminance threshold for light OFF determination (herein, OFF illumnance threshold) is set to Doff = 1000 (Lux), assuming that a particularly bright cloud appears at nightfall, and the brightness of the cloud CL is Lc = 1200 (Lux), and the brightness of a sky other than the cloud is La = 480, the upward illuminance to be detected in the conventional visual field range:

$$Lo = 0.1 \times La + 0.9 \times Lc = 1128.0 \text{ (Lux)}$$

On the other hand, the visual field range $\beta n$ of a wide angle:

$$Ln = (1 - A) \times La + A \times Lc = 980.3$$

Accordingly the upward illuminance Lu does not reach the OFF illuminance threshold Doff. Therefore in a state where the head light 50 is already switched on, even if the event that the forward illuminance Lf varies to Doff or more occurs together because of the other factor such as a case where a vehicle travels toward the afternoon sun, the upward illuminance Lu is held to be low, and the head light 50 is never switched off by temporal appearance of a white cloud.
In reverse, in a case where a black cloud appears at a daytime, assuming that the brightness of the cloud is Lc = 400 (Lux), and the brightness of a sky other than the cloud is La = 1200, the upward illuminance to be detected in the conventional visual field range according to the above-mentioned same calculation formula:

$$Lo = 480.0 \text{ (Lux)}$$

On the other hand, the visual field range $\beta n$ of a wide angle:

$$Ln = 640.0$$

Accordingly the upward illuminance Lu is not lowered to the ON illuminance threshold Don. Therefore even if the event that the forward illuminance Lf varies to less than Don occurs together because of the factor such as a shadow of a building or a preceding vehicle during vehicle traveling at a daytime, the head light 50 is never switched on by temporal appearance of a black cloud. This matter can be applied to a case where a vehicle travels on a general road positioned under the high-speed road (a dark part of a ceiling under an elevated road is equivalent to a black cloud), wherein since the upward illuminance Lu is not lowered to the ON illuminance threshold Don, the head light 50 is not switched on or off along with the vehicle entering or leaving a road under the elevated road. From the above, in the present embodiment the visual field range $\beta$ of the upward illuminance sensor 14 is set to 45° or more.

Next, the condition is set such that the time when the surroundings of a vehicle start to be dark is approximately two hours before sunset, and the afternoon sun in this twilight time zone is not put in the visual field range β of the upward illuminance sensor 14. That is, since the sun around two hours before sunset is positioned in a height of approximately 30° from the horizontal line, an outer edge of the visual field range β is set to a position higher than the height of approximately 30° from the horizontal line. An inclination of the windshield W on which the sensor unit 10 is mounted is mostly within a range of 20° to 40° (140° to 160° from the forward) to the horizontal line, and a normal line of the mounting surface S of the sensor unit 10 to the windshield W is directed upwards in a range of 50° to 70° from the forward. Accordingly when a front edge of the visual field range β of the upward illuminance sensor 14 is set to less than 20° forward of the normal line of the mounting surface S, the afternoon sun area in a range of 30° from the horizontal line can certainly be avoided.

On the other hand, when the rear edge of the upward illuminance sensor 14 in the visual field range β becomes in parallel with the mounting surface S, it can not take in light because of total reflection, a range to 80° backward of the normal line is a limit of the rear edge. From the above, the visual field range β of the upward illuminance sensor 14 becomes 100° at a maximum including a range before and after the normal line of the mounting surface S. That is, it is preferable that the visual field range β of the upward illuminance sensor 14 is selected in a range of 45° to 100°.

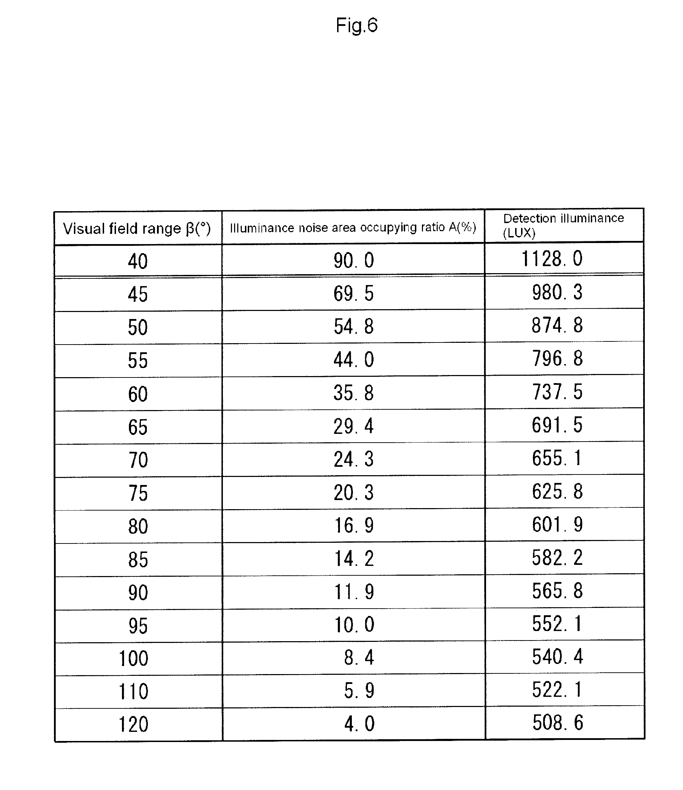

FIG. 6 shows an illuminance noise area (white cloud) occupying ratio and upward illuminance to be detected in a case where the visual field range β is widen in a unit of 5° in appearance of a white cloud occupying 90% in the above-mentioned conventional visual field range βo. It should be noted that the visual field range 40° is a value in the conventional example. According to this table it is found out that if the visual field range β is 65° or more, the illuminance noise area occupying ratio can be restricted to approximately one third or less, and if the visual field range β is 75° or more, the illuminance noise area occupying ratio can be restricted to approximately one fifth or less. On the other hand, as the visual field range β is made the larger, the curvature of the concave surface 8 of the upward light guide part 6u on the end surface at a side of the room inside is required to be the larger, and it is particularly preferable that the visual field range β is 90° or less for avoiding an extreme curvature.

In the present embodiment, the head light 50 corresponds to a light in the aspect of the present invention.

The present embodiment is configured as described above, wherein the light automatic ON/OFF control device 1 comprises the forward illuminance sensor 12 for detecting illuminance forward of a vehicle, the upward illuminance sensor 14 for detecting illuminance upward of the vehicle, and the control unit 20 configured to compare output of the forward illuminance sensor 12 and the upward illuminance sensor 14 with a predetermined illuminance threshold to control an ON/OFF operation of the head light 50, wherein the visual field range β of the upward illuminance sensor 14 is set to a range equal to or more than 45°. Therefore even if white clouds or black clouds appear, since an influence by the noise area of the cloud is reduced in the visual field range β of the upward illuminance sensor 14, the upward illuminance Lu does not cross the illuminance threshold. Therefore a temporal ON/OFF operation of the head light 50 can be prevented.

The forward illuminance sensor 12 comprises the forward light-receiving element 13 and the forward light guide part 6f of the light guide body 5 for guiding the outside light forward of the vehicle to the forward light-receiving element 13, and the upward illuminance sensor 14 comprises the upward light-receiving element 15 and the upward light guide part 6u of the light guide body 5 for guiding the outside light upward of the vehicle to the upward light-receiving element 15. In a state where the light guide body 5 is mounted to the windshield W for the vehicle, the front edge of the visual field range β of the upward illuminance sensor 14 is set to be 30° or more upward of the horizontal line forward of the vehicle, and the rear edge of the visual field range β of the upward illuminance sensor 14 is set to be 80° or less backward of the normal line in the mounting position to the windshield W. Therefore also in a case where the vehicle travels toward the afternoon sun, the afternoon sun does not enter into the visual field range of the upward illuminance sensor 14, and the outside light within the visual field range β is not subject to total reflection and is guided to the upward light-receiving element 15.

The upward light guide part 6u of the upward illuminance sensor 14 has the concave surface 8 on the opposing end to the upward light-receiving element 15 to form the concave lens. Therefore it is possible to easily obtain a wide visual field range β of 45° or more. In addition, since the forward light guide part 6f and the upward light guide part 6u are formed as the united light guide body 5 having the mounting surface S in common to the windshield W, the forward light guide part 6f and the upward light guide part 6u are formed as the downsized single component. Therefore the component cost and the management man-hour can be reduced and the mounting work to the windshield W is easy. Since the light to the side wall 5b of the light guide body 5 is blocked, the outside light other than the light incident from the forward and the upward can be prevented from entering into the light guide body 5 (forward light guide part 6f and upward light guide part 6u) to obtain the accurate forward illuminance Lf and upward illuminance Lu.

The control unit 20 switches on the head light 50 when the forward illuminance Lf that is output from the forward illuminance sensor 12 and the upward illuminance Lu that is output from the upward illuminance sensor 14 both are smaller than the ON illuminance threshold Don, and switches off the head light 50 when the forward illuminance Lf and the upward illuminance Lu both are equal to or more than the OFF illuminance threshold Doff larger than the ON illuminance threshold Don. Therefore even if only one of the forward illuminance Lf and the upward illuminance Lu crosses the ON illuminance threshold Don or the OFF illuminance threshold Doff, the state of the head light 50 does not change. For example, in a state where the head light 50 is being switched on at night, even if only the forward illuminance Lf is made to be equal to or more than the OFF illuminance threshold Doff by a light of an oncoming vehicle, the ON state of the head light 50 continues without switching off. In addition, in a state where the head light 50 is being switched off at a daytime, even if only the forward illuminance Lf is made to be below the ON illuminance threshold Don by shadows of buildings or the like, the OFF state of the head light 50 continues without switching on.

It should be noted that in the present embodiment, the control unit 20 determines the necessity of the ON/OFF operation of the head light 50 by comparing each detection illuminance of the forward illuminance sensor 12 and the upward illuminance sensor 14 with two thresholds of the ON illuminance threshold Don and the OFF illuminance threshold Doff. However, the present invention in which the visual field range β of the upward illuminance sensor 14 is widen may be applied to the device in which the control unit 20 is configured in the same way as the configuration shown in FIG. 2 in Japanese Utility Model Laid-Open Publication No. 59-58643, for example, and can  similarly reduce the influence of the noise to reduce botheration or the strange feeling given to a user.

The present embodiment shows an example of controlling the head light based upon the output of the forward illuminance sensor 12 and the upward illuminance sensor 14, but the control target is not limited to the head light, and, for example, an ON/OFF operation of a rear lamp for a vehicle may be controlled.

While only the selected embodiment has been chosen to illustrate the present invention, it will be apparent to those skilled in the art from this disclosure that various changes and modifications can be made therein without departing from the scope of the invention as defined in the appended claims. Furthermore, the foregoing description of the embodiment according to the present invention is provided for illustration only, and not for the purpose of limiting the invention as defined by the appended claims and their equivalents.


[Description of Codes]

| 1 | Light automatic ON/OFF control device |
|---|---|
| 2 | Casing |
| 3 | Front wall |
| 3a | Window |
| 4 | Rear wall |
| 5 | Light guide body |
| 5b | Side wall |
| 6f | Forward light guide part |
| 6u | Upward light guide part |
| 7 | Convex surface |
| 8 | Concave surface |
| 9 | Light blocking wall |
| 10 | Sensor unit |
| 12 | Forward illuminance sensor |
| 13 | Forward light-receiving element |
| 14 | Upward illuminance sensor |
| 15 | Upward light-receiving element |
| 20 | Control unit |
| 22 | Outside memory |
| 30 | Relay |
| 40 | Selector switch |
| 50 | Head light |
| 52 | High beam light |
| 54 | Low beam light |
| α, β | Visual field range |
| CL | Cloud |
| S | Mounting surface |
| VCC | Power source |
| W | Windshield |

**Claims**

1. A light automatic ON/OFF control device (1) comprising: a forward illuminance sensor (12) for detecting illuminance forward of a vehicle;
an upward illuminance sensor (14) for detecting illuminance upward of the vehicle; and
a control unit (20) configured to compare output of each of the forward illuminance sensor (12) and the upward illuminance sensor (14) with a predetermined illuminance threshold to control an ON/OFF operation of a light, wherein a visual field range of the upward illuminance sensor (14) is set to a range equal to or more than 45°.

2. A light automatic ON/OFF control device according to claim 1, wherein
the forward illuminance sensor (12) comprises:

   a forward light-receiving element (13); and
   a light guide body (5) that is mounted to a windshield (W) of the vehicle to guide outside light forward of the vehicle to the forward light-receiving element (13), and
   the upward illuminance sensor (14) comprises:

an upward light-receiving element (15); and
a light guide body (5) that is mounted to the windshield of the vehicle to guide outside light upward of the vehicle to the upward light-receiving element (15), wherein
in a state where the light guide body (5) is mounted to the windshield (W), a front edge of the visual field range of the upward illuminance sensor (14) is set to be 30° or more upward of a horizontal line forward of the vehicle, and a rear edge of the visual field range of the upward illuminance sensor (14) is set to be 80° or less backward of a normal line in the mounting position to the windshield.

3. A light automatic ON/OFF control device according to claim 2, wherein
the light guide body (5) of the upward illuminance sensor (14) includes a concave surface (8) on the opposing end to the upward light-receiving element (15) to form a concave lens.

4. A light automatic ON/OFF control device according to claim 2 or 3, wherein the light guide body (5) of the forward illuminance sensor (12) and the light guide body (5) of the upward illuminance sensor (14) have a mounting surface (S) in common to the windshield (W) and are formed integrally.

5. A light automatic ON/OFF control device according to claim 4, wherein light to a side wall (5b) of the integrally formed light guide body (5) is blocked.

6. A light automatic ON/OFF control device according to any of claims 1 to 3,
wherein
the control unit (20) switches on the light when output of the forward illuminance sensor (12) and output of the upward illuminance sensor (14) both are smaller than a predetermined ON illuminance threshold, and switches off the light when the output of the forward illuminance sensor (12) and the output of the upward illuminance sensor (14) both are equal to or more than a predetermined OFF illuminance threshold larger than the ON illuminance threshold.

Fig.1

EP 2 696 180 A1

Fig.2

EP 2 696 180 A1

Fig.3

```
                    ┌─────────────┐
                    │    Start    │
                    └──────┬──────┘
                           │
         ┌─────────────────▼─────────────────┐
         │ Initialize an ON counter T1       │╮__ 100
         │ and an OFF counter T2             │
         └─────────────────┬─────────────────┘
                           │
         ┌─────────────────▼─────────────────┐
         │ Read in an ON illuminance threshold Don │╮__ 101
         │ and an OFF illuminance threshold Doff   │
         └─────────────────┬─────────────────┘
```

Input forward illuminance Lf
and upward illuminance Lu ~102

Light ON state ? ~103

Lf < Don
and
Lu < Don ~104

T1 ≥ 1 ? ~106

T1 = T1-1 ~107

T1 = T1+1 ~105

T1 = Ton ? ~108

Light ON ~109

Reset T1 ~110

Fig.4

① ②

$Lf \geqq Doff$ and $Lu \geqq Doff$ ? ——111

N

$T2 \geqq 1$ ? ——113
N

Y ——112
$T2 = T2+1$

Y ——114
$T2 = T2-1$

$T2 = Toff$ ? ——115
N

Y

Light OFF ——116

Reset T2 ——117

Fig.5A

Fig.5B

Fig.6

| Visual field range β(°) | Illuminance noise area occupying ratio A(%) | Detection illuminance (LUX) |
|---|---|---|
| 40 | 90. 0 | 1128. 0 |
| 45 | 69. 5 | 980. 3 |
| 50 | 54. 8 | 874. 8 |
| 55 | 44. 0 | 796. 8 |
| 60 | 35. 8 | 737. 5 |
| 65 | 29. 4 | 691. 5 |
| 70 | 24. 3 | 655. 1 |
| 75 | 20. 3 | 625. 8 |
| 80 | 16. 9 | 601. 9 |
| 85 | 14. 2 | 582. 2 |
| 90 | 11. 9 | 565. 8 |
| 95 | 10. 0 | 552. 1 |
| 100 | 8. 4 | 540. 4 |
| 110 | 5. 9 | 522. 1 |
| 120 | 4. 0 | 508. 6 |

Fig.7

Clear sky
Presence of white clouds

Upward
illuminance
[LUX]

K

D

Time

EP 2 696 180 A1

Europäisches
Patentamt

European
Patent Office

Office européen
des brevets

**EUROPEAN SEARCH REPORT**

Application Number

EP 13 17 8829

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2005 055306 A1 (PREH GMBH [DE]) 30 November 2006 (2006-11-30) * paragraphs [0014] - [0023]; figures 1-3 * ----- | 1-6 | INV. G01J1/18 G01J1/42 G01J1/04 G01J1/02 |
| X | DE 196 30 216 A1 (DAIMLER BENZ AG [DE]) 29 January 1998 (1998-01-29) * column 1, lines 29-65; figures 1,2 * * column 3, line 48 - column 4, line 14 * ----- | 1-6 | |
| X | EP 1 566 654 A2 (HELLA KGAA HUECK & CO [DE]) 24 August 2005 (2005-08-24) * paragraph [0019]; figure 6 * ----- | 1-6 | |
| A | DE 10 2009 028468 A1 (BOSCH GMBH ROBERT [DE]) 17 February 2011 (2011-02-17) * paragraphs [0039], [0040]; figure Fig. 4 * ----- | 3 | |

TECHNICAL FIELDS
SEARCHED (IPC)

G01J

The present search report has been drawn up for all claims

| Place of search | Date of completion of the search | Examiner |
|---|---|---|
| Munich | 22 November 2013 | Hambach, Dirk |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 13 17 8829

This annex lists the patent family members relating to the patent documents cited in the above-mentioned European search report.
The members are as contained in the European Patent Office EDP file on
The European Patent Office is in no way liable for these particulars which are merely given for the purpose of information.

22-11-2013

| Patent document cited in search report | Publication date | Patent family member(s) | | Publication date |
|---|---|---|---|---|
| DE 102005055306 A1 | 30-11-2006 | NONE | | |
| DE 19630216 A1 | 29-01-1998 | NONE | | |
| EP 1566654 A2 | 24-08-2005 | DE 102004003686 A1 | | 18-08-2005 |
| | | DE 202005021929 U1 | | 16-08-2011 |
| | | EP 1566654 A2 | | 24-08-2005 |
| DE 102009028468 A1 | 17-02-2011 | NONE | | |

EPO FORM P0459

For more details about this annex : see Official Journal of the European Patent Office, No. 12/82

**EP 2 696 180 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 59058643 A

---